(19) Europäisches Patentamt
European Patent Office
Office européen des brevets

(11) Veröffentlichungsnummer: **0 061 116**
**B1**

# (12) EUROPÄISCHE PATENTSCHRIFT

(45) Veröffentlichungstag der Patentschrift: **23.05.84**

(51) Int. Cl.³: **C 07 F 9/42**

(21) Anmeldenummer: **82102085.6**

(22) Anmeldetag: **15.03.82**

## (54) Verfahren zur Herstellung von Vinylphosphonsäuredichlorid und 2-Chlorethanphosphonsäuredichlorid.

(30) Priorität: **20.03.81 DE 3110976**

(43) Veröffentlichungstag der Anmeldung: **29.09.82 Patentblatt 82/39**

(45) Bekanntmachung des Hinweises auf die Patenterteilung: **23.05.84 Patentblatt 84/21**

(84) Benannte Vertragsstaaten: **BE CH DE FR GB IT LI NL**

(56) Entgegenhaltungen:
**EP-A- 0 032 663**
**EP-A- 0 047 460**
**FR-A- 2 251 570**
**FR-A- 2 283 145**
**CHEMICAL ABSTRACTS, Band 78, Nr. 5, 5. Februar 1973, Seite 517, Nr. 29900q, Columbus, Ohio (USA); M. YAMAGAMI et al.: "Gamma-induced addition of dialkyl phosphites to olefins and pyrolysis of the 1 : 1 adducts"**

(73) Patentinhaber: **HOECHST AKTIENGESELLSCHAFT**
**Postfach 80 03 20**
**D-6230 Frankfurt am Main 80 (DE)**

(72) Erfinder: **Kleiner, Hans-Jerg, Dr.**
**Altkönigstrasse 11a**
**D-6242 Kronberg/Taunus (DE)**

**EP 0 061 116 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

2-Chlorethylestergruppen enthaltende 2-Chlorethanphosphonsäurederivate sind Ausgangsstoffe zur Herstellung von 2-Chlorethanphosphonsäuredichlorid, aus dem durch Chlorwasserstoffabspaltung Vinylphosphonsäuredichlorid hergestellt werden kann (DE-P 2 132 962 ; DE-P-2 357 678). Bei diesem Verfahren fallen während der Herstellung des 2-Chlorethanphosphonsäuredichlorids beträchtliche Mengen an 1,2-Dichlorethan an. Neben einer ungünstigen Beeinflussung der Raum/Zeitausbeute durch das 1,2-Dichlorethan ist dieses Nebenprodukt aus Gründen der Gesundheitsgefährdung am Arbeitsplatz unerwünscht. Gesucht sind daher Verfahren, bei denen 1,2-Dichlorethan nicht mehr in Erscheinung tritt. Die Chlorierung von Hydroxyethanphosphonsäure und Derivaten derselben mittels Phosgen in Gegenwart von Katalysatoren ist in der DE-A-2 357 676 beschrieben.

Es wurde nun gefunden, daß man auf einfache und wirtschaftliche Weise Vinylphosphonsäuredichlorid und 2-Chlorethanphosphonsäuredichlorid herstellen kann, indem man 2-Acetoxyethanphosphonsäuredialkylester der allgemeinen Formel

$$CH_3COOCH_2CH\overset{O}{\overset{\|}{P}}(OR)_2$$

worin R Alkylgruppen mit 1 bis 4, bevorzugt 1 bis 2 Kohlenstoffatomen bedeutet, in Gegenwart saurer oder basischer Katalysatoren auf 150-270 °C, vorzugsweise 170-230 °C erhitzt, wobei Alkylacetat der allgemeinen Formel

$$CH_3COOR$$

worin R die obengenannte Bedeutung hat, abspaltet, das dabei entstehende Reaktionsgemisch mit Wasser bei Temperaturen zwischen 130-230 °C, vorzugsweise 140-175 °C, unter gleichzeitiger Abdestillation des gebildeten Alkohols der allgemeinen Formel

$$ROH$$

worin R die obengenannte Bedeutung hat, umsetzt und die dabei gebildete rohe Vinylphosphonsäure in Gegenwart von basischen Katalysatoren, aber auch Alkalimetallsalzen sowie in Gegenwart von Phosphonsäuredichloriden mit Phosgen umsetzt. Die bei dem Verfahren anfallenden Phosphonsäuredichloride sind sehr rein und frei von Nebenprodukten. Sie fallen in hohen Ausbeuten an.

Es ist überraschend, daß die bei diesen Mehrstufenprozess anfallenden Säurechloride praktisch frei von Nebenprodukten in hoher Ausbeute gewonnen werden.

Als Ausgangsmaterialien kommen z. B. in Frage 2-Acetoxyethanphosphonsäuredimethyl-, diethyl-, diisopropyl- und di-n-butylester. Besonders bevorzugt ist der 2-Acetoxyethanphosphonsäuredimethylester.

Als saure oder basische Katalysatoren kommen zahlreiche Verbindungen in Frage. Als saure Katalysatoren lassen sich verwenden :

A) Schwefelsäure oder Phosphorsäure

B) Halogenhaltige Carbonsäure mit einem $P_{Ka}$-Wert < 2,5, wie Dichloressigsäure, Trichloressigsäure, Trifluoressigsäure

C) Aromatische Sulfonsäuren mit einem $P_{Ka}$-Wert < 2,5, wie Benzolsulfonsäure, p-Toluolsulfonsäure

D) Bevorzugt Phosphinsäuren mit 2 bis 18 Kohlenstoffatomen die Dimethylphosphinsäure, Methylethylphosphinsäure, Dioktylphosphinsäure, Methylphenylphosphinsäure, Diphenylphosphinsäure

E) Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Acetoxyethanphosphonsäure, 2-Acetoxyethanphosphonsäuremonomethylester, Vinylphosphonsäure, Vinylphosphonsäuremonomethylester, Vinylphosphonsäuremonoethylester, Benzolphosphonsäure

F) Ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonomethylester

G) Sehr eignet sind auch die sauren Reaktionsgemische, die bei dem erfindungsgemäßen Verfahren entstehen.

Als basische Katalysatoren lassen sich verwenden :

A) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin und Tris-(p-dimethylaminophenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin, N,N-Tetramethylphenyldiamin oder N-Methylpyrrolidin ; Methyldiethylphosphin, Dimethylpropylphosphin, Diethylbenzylphosphin, 1-Methylphospholen-3 und 1-Ethyl-3-methylphospholen-3.

B) Quartäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid, Triethylbenzylammoniumbromid, Trimethylbenzylphosphoniumchlorid, Triphenylethylphosphonium-2,4-diaminobenzosulfonat ;

C) Heterocyclische Verbindungen mit aromatischem Charakter wie Pyridin, Chinolin, ihre verschiedenen Alkyl- und Dialkyl-, vorzugsweise Methyl- bzw. Dimethyl-derivate, Imidazol, N-Vinylimidazol, Benzthiazol, 2-Amino-6-ethoxybenzthiazol, ferner Phosphabenzole ;

D) Säureamide wie Dimethylformamid, N-Dimethylacetamid, N-Diethylpropionamid, N-Dimethylbenzamid, N-Methylpyrrolidon, N,N'-Tetramethylterephthalsäurediamid oder Harnstoffe wie Tetramethylharnstoff und Trimethylphenylharnstoff ;

E) Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Triphenylphosphinoxid, Dimethylphenylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphin-dichlorid, Dimethyldodecylphosphinsulfid, Triphenylphosphinimin, Dimethylchlormethylphosphindichlorid, N-2-Dimethylphosphinylethyl-methylacetamid, N-2-Dimethylphosphinyl-ethyl-methylamin, Phospholenoxid wie 1-Methylphospholen-1-oxid und 1-Ethyl-3-methylphospholen-1-oxid ;

F) Amide der phosphinigen und phosphonigen Säure und der Phosphin- und Phosphonsäuren sowie ihrer Thioanloga, wie Ethan phosphonsäure-bis-diethylamid, Methan-butanphosphinigsäure-dimethylamid, Diethylphosphinigsäureisobutylamid. Ferner Triamide der Phosphor- und der Thiophosphorsäure wie Hexamethylphosphorsäuretriamid.

G) Alkalicarbonate, bevorzugt Soda und Pottasche, Alkalihydroxyde, bevorzugt Natrium- und Kaliumhydroxyd, Alkalialkoholate, bevorzugt Natriummethylat.

Als Alkalimetallsalze lassen sich insbesondere die Natrium- oder Kaliumsalze der unter A bis F genannten Säuren, die als saure Katalysatoren benannt sind, verwenden.

Die Katalysatoren werden in Mengen von 0,01 bis 10, bevorzugt 0,1 bis 5 Gew.-% eingesetzt. Bei Verwendung von Vinylphosphonsäure, deren Monoalkylestern oder der bereits gewonnenen sauren Reaktionsgemische können auch größere Mengen von 10 bis 50 Gew.-% eingesetzt werden.

Das Verfahren wird im allgemeinen so durchgeführt, daß das Ausgangsprodukt mit dem Katalysator vermischt wird und auf die erforderliche Reaktionstemperatur von 150 bis 270 °C, vorzugsweise 170 bis 230 °C gebracht wird.

Höhere Temperaturen sind möglich, bringen aber keinen Vorteil. Es besteht dann die Gefahr der verstärkten Bildung von Nebenprodukten, aber auch der Polymerisation.

Das sich abspaltende Alkylacetat destilliert dann zusammen mit geringen Mengen Alkanol und Dialkylether ab. Die Destillation erfolgt unter Normaldruck, gegebenenfalls unter Zuhilfenahme eines Inertgases, wie z. B. Stickstoff. Es kann jedoch im Einzelfall vorteilhaft sein, im Vakuum abzudestillieren. Die Abspaltung des Alkylacetats ist nach 2 bis etwa 20 Stdn. beendet. Es kann zweckmäßig sein, danach noch 1 bis 4 Std. bei der Reaktionstemperatur, aber auch höheren Temperaturen, nachzurühren. Das Verfahren kann auch kontinuierlich gestaltet werden.

Es kann vorteilhaft sein, Polymerisationsinhibitoren, wie z. B. Hydrochinon, Hydrochinonmonomethylether oder Phenothiazin, zuzusetzen.

Geht man von 2-Acetoxyethanphosphonsäurediestern aus, die von ihrer Herstellung her mit geringen Mengen des entsprechenden Monoesters verunreinigt sind, ist ein weiterer Zusatz eines Katalysators nicht unbedingt notwendig. Es ist dabei zweckmäßig, die Reaktion bei etwa 250 °C zu beginnen. Wenn sich dann das saure Reaktionsprodukt, das ja ebenfalls als Katalysator für die Abspaltung wirkt, in genügendem Ausmaß gebildet hat, kann man das Verfahren bei tieferen Temperaturen, beispielsweise bei 180 bis 220 °C, weiterführen.

Das bei dieser Abspaltungsreaktion entstandene Reaktionsgemisch enthält im wesentlichen Vinylphosphonsäurederivate, Vinylpyrophosphonsäurederivate, oligomere Pyrophosphonsäurederivate und Derivate der 2-Hydroxyethanphosphonsäure zusammen mit Phosphorsäurederivaten. Das Reaktionsgemisch wird so, wie es anfällt, anschließend bei der erforderlichen Reaktionstemperatur mit Wasser umgesetzt, wobei der entstehende Alkohol zweckmäßig über eine Kolonne abdestilliert wird. Es können sich dabei geringe Mengen an Dialkylether und Olefinen bilden. Die Umsetzung mit Wasser ist beendet, wenn kein Alkohol mehr abgespalten wird. Dabei kann es vorteilhaft sein, gegen Ende der Umsetzung größere Mengen Wasser einzusetzen und einen Teil des nicht umgesetzten Wassers mit dem Alkohol abzudestillieren. Der verfahrensgemäß zu wählende Druck ist nicht kritisch, jedoch wird das Verfahren bevorzugt bei etwa Atmosphärendruck durchgeführt.

Die Reaktionstemperaturen bei diesem Verfahrensschritt liegen bei 130-230 °C. Auch oberhalb 230 °C kann die Reaktion durchgeführt werden, jedoch ist dann im zunehmenden Maße eine Zersetzung der Vinylphosphonsäure zu erwarten. Bevorzugt wird im Temperaturbereich 140-175 °C gearbeitet.

Die Umsetzung mit Wasser kann auch kontinuierlich durchgeführt werden.

Die Umsetzung mit Wasser führt zu einer rohen Vinylphosphonsäure, die neben 2-Hydroxyethanphosphonsäure bzw. Derivaten der 2-Hydroxyethanphosphonsäure insbesondere noch Phosphorsäure enthält. Die anfallende rohe Vinylphosphonsäure wird schließlich in einem weiteren Reaktionsschritt phosgeniert, und zwar bei Temperaturen von 90 bis 200 °C, vorzugsweise 120-170 °C, in Gegenwart von basischen Katalysatoren oder Alkalimetallsalzen der oben unter A bis F aufgeführten Säuren sowie in Gegenwart von Phosphonsäuredichloriden. Wurde bereits bei der Abspaltung der Alkylacetate in Gegenwart

dieser Katalysatoren gearbeitet, so erübrigt sich jetzt ein weiterer Zusatz an Katalysatoren.

Das Verfahren kann, ebenso wie die erste Reaktionsstufe, kontinuierlich gestaltet werden. Auch kann es vorteilhaft sein, die bereits oben erwähnten Polymerisationsinhibitoren zuzusetzen.

Als Katalysatoren, die in dieser « Phosgenierung » zwingend anwesend sein müssen, kommen in Frage die basischen Katalysatoren, wie sie oben ausgeführt sind für die erste Stufe, sowie die Alkalimetallsalze der oben unter A bis F genannten Säuren.

Grundsätzlich wird die « Phosgenierung » so durchgeführt, daß man von Anfang an Phosphonsäuredichloride zugibt. Infrage kommen hierfür $C_1$-$C_{12}$-Alkanphosphonsäuredichloride, z. B. Methan-, Ethan- oder Propanphosphonsäuredichlorid, bevorzugt aber Vinylphosphonsäuredichlorid, besonders bevorzugt 2-Chlorethanphosphonsäuredichlorid oder Gemische dieser Säurechloride. Die Menge dieser Phosphonsäuredichloride insgesamt beträgt, bezogen auf die Vinylphosphonsäurederivate (1. Stufe), ca. 5 bis 200, vorzugsweise 20 bis 100 Gew.-%.

Bei dieser « Phosgenierung » erhält man ein Gemisch aus Vinylphosphonsäuredichlorid und 2-Chlorethanphosphonsäuredichlorid. Die Herstellung von Vinylphosphonsäuredichlorid läßt sich in der Weise optimieren, daß man bei der Phosgenierung bereits von Anfang an eine gewisse Menge an 2-Chlorethanphosphonsäuredichlorid zugibt. In der Praxis hat sich ergeben daß man die beste Ausbeute an Vinylphosphonsäuredichlorid erhält, wenn man ein Gemisch aus Vinyl- und 2-Chlorethanphosphonsäuredichlorid vorlegt. Durch Vorversuche läßt sich gegebenenfalls leicht die Menge an Phosphonsäuredichlorid ermitteln, die zur Erreichung einer maximalen Ausbeute an Vinylphosphonsäuredichlorid und/oder Chlorethanphosphonsäuredichlorid bei der Chlorierung anwesend sein muß. Man erhält dann am Ende der « Phosgenierung » die gleiche Menge an 2-Chlorethanphosphonsäuredichlorid, die man am Anfang der Reaktion zugesetzt hat, während dagegen bedeutend mehr Vinylphosphonsäuredichlorid entsteht als anfänglich zugeben. Selbstverständlich ist es ebenso möglich, die Reaktion durch Vorlage geeigneter Mengen an Vinylphosphonsäuredichlorid so zu lenken, daß im wesentlichen oder ausschließlich 2-Chlorethanphosphonsäuredichlorid anfällt. Art und Menge des Zur Erzielung eines bestimmten Ergebnisses notwendigen Phosphonsäuredichlorids hängt im einzelnen ab von den Reaktionsbedingungen wie Zeit, Temperatur und Art des Katalysators.

Nach beendeter Chlorierung erhält man ein Gemisch aus Vinyl- und 2-Chlorethanphosphonsäuredichlorid, das sich leicht destillativ trennen läßt. Beide Verbindungen sind wichtige phosphororganische Zwischenprodukte für die Herstellung von Verbindungen zur flammhemmenden Ausrüstung bzw. für die Herstellung von 2-Chlorethanphosphonsäure, die als Wachstumsregulator im Pflanzenschutz eingesetzt wird.

## Beispiel 1

Ein Gemisch von 50 g Vinylphosphonsäure und 100 g 2-Acetoxyethanphosphonsäuredimethylester wird unter Rühren auf ca. 180 °C erhitzt, anschließend werden 450 g 2-Acetoxyethanphosphonsäuredimethylester während 10 Stunden eingetropft, die Temperatur wird dabei auf 192 °C gesteigert. Gleichzeitig destillieren 205 g Methylacetat ab. In einer nachgeschalteten Kühlfalle sammeln sich 7 g Dimethylether. Der anfallende Rückstand von 374 g wird eine Stunde auf 200 °C nacherhitzt. Dann wird der Rückstand bei 160-170 °C während 6 Stunden mit Wasser umgesetzt, das anfallende Methanol destilliert dabei über eine 1 m-Silbermantelkolonne ab. Man erhält 366 g rohe Vinylphosphonsäure. 164 g dieser rohen Vinylphosphonsäure werden in ein Gemisch von 136,7 g 2-Chlorethanphosphonsäuredichlorid : 27,3 g Vinylphosphonsäuredichlorid und 1 g Phosphorsäuretrisdimethylamid bei 140-150 °C während 20 Stunden unter lebhahtem Rühren eingetropft, wobei Phosgen in das Reaktionsgemisch eingeleitet wird. Dann wird bei Raumtemperatur das im Reaktionsansatz vorhandene überschüssige Phosgen durch Stickstoff ausgeblasen und der Rückstand bei 2 Torr (2,66 mbar) destilliert. Man erhält 186 g Vinylphosphonsäuredichlorid, 157,5 g 2-Chlorethanphosphonsäuredichlorid und 19 g Destillationsrückstand. Bezogen auf die eingesetzte rohe Vinylphosphonsäure beträgt die Ausbeute an Vinylphosphonsäuredichlorid 72,5 % d. Th. und an 2-Chlorethanphosphonsäuredichlorid 7,5 % d. Th.

## Beispiel 2

Ein Gemisch von 50 g Vinylphosphonsäure und 100 g 2-Acetoxyethanphosphonsäuredimethylester wird unter Rühren auf 180 °C erhitzt, anchließend werden 450 g 2-Acetoxyethanphosphonsäuredimethylester während 10 Stunden eingetropft, die Temperatur wird dabei auf 190 °C gesteigert. Gleichzeitig destillieren 205 g Methylacetat ab. In einer nachgeschalteten Kühlfalle sammeln sich 7 g Dimethylether. Der anfallende Rückstand von 374 g wird bei 160-175 °C während 6 Stunden mit Wasser umgesetzt, das anfallende Methanol destilliert dabei über eine Kolonne ab. Man erhält 374 g rohe noch wasserhaltige Vinylphosphonsäure. 174 g dieser rohen Vinylphosphonsäure werden in ein Gemisch von 145 g Vinylphosphonsäuredichlorid und 1 g Trismethylphosphinoxid bei 140 °C während 12 Stunden unter lebhaftem Rühren eingetropft, wobei Phosgen in das Reaktionsgemisch eingeleitet wird. Dann wird bei Raumtemperatur das im Reaktionsansatz vorhandene überschüssige Phosgen durch Stickstoff ausgeblasen und der Rückstand bei 2 Torr (2,66 mbar) destilliert. Man erhält 185,5 g Vinylphosphonsäuredichlorid, 166 g 2-Chlorethanphosphonsäuredichlorid und 15 g Destillationsrückstand.

Beispiel 3

100 g 2-Acetoxyethanphosphonsäuredimethylester werden unter Rühren auf 230 °C erhitzt. Dann wird bei 220-230 °C ein Gemisch von 200 g 2-Acetoxyethanphosphonsäuredimethylester und 3 g 4-(Dimethylamino)pyridin während 2 Stunden eingetropft. Weitere 3,5 Stunden wird der Reaktionsansatz bei 210 °C gehalten, dann 30 Minuten bei 200-210 °C. Während der gesamten Reaktionsdauer destilliert Methylacetat ab. Man erhält 117 g Methylacetat und in einer der Apparatur nachgeschalteten Kühlfalle 6 g Dimethylether. Das anfallende Reaktiongemisch wird mit Wasser bei 160 °C während 4 Stunden unter Rühren umgesetzt, während Methanol über eine Silbermantelkolonne abdestilliert. Man erhält 172 g einer rohen Vinylphosphonsäure; das in der Säure gelöste Wasser wird bei 90 °C im Vakuum abdestiliert. Es verbleiben 164 g rohe wasserfreie Vinylphosphonsäure. 155 g dieser rohen Vinylphosphonsäure werden in ein Gemisch von 129 g 2-Chlorethanphosphonsäuredichlorid und 26 g Vinylphosphonsäuredichlorid bei 140 °C während 4 Stunden unter lebhaftem Rühren eingetropft, wobei in das Reaktionsgemisch Phosgen eingeleitet wird. Anschließend wird während 5 Stunden Phosgen weiter eingeleitet. Dann wird bei Raumtemperatur das im Reaktionsansatz vorhandene überschüssige Phosgen durch Stickstoff ausgeblasen und der Rückstand bei 0,5 Torr (0,67 mbar) destilliert. Man erhält 176 g Vinylphosphonsäuredichlorid, 141 g 2-Chlorethanphosphonsäuredichlorid und 20 g Rückstand. Bezogen auf die eingesetzte rohe Vinylphosphonsäure beträgt die Ausbeute an Vinylphosphonsäuredichlorid 72 % d. Th. und an 2-Chlorethanphosphonsäuredichlorid 4,5 % d. Th.

Beispiel 4

50 g 2-Acetoxyethanphosphonsäuredimethylester und 50 g Vinylphosphonsäure werden unter Rühren auf 170-185 °C erhitzt. Dann werden bei dieser Temperatur 450 g 2-Acetoxyethanphosphonsäuredimethylester während 14,5 Stunden eingetropft, während gleichzeitig Methylacetat abdestilliert. Man erhält 200 g Methylacetat und in einer der Apparatur nachgeschalteten Kühlfalle 10 g Leichtsieder. Man erhält 391 g eines Reaktionsgemisches, das anschließend bei 160-170 °C während 9 Stunden unter Rühren mit Wasser umgesetzt wird, während Methanol über eine Silbermantelkolonne abdestilliert. Die anfallende rohe Vinylphosphonsäure wird bei 90 °C im Vakuum von gelösten Anteilen Wasser befreit. Es verbleiben 369 g wasserhelle rohe Vinylphosphonsäure. 200 g dieser Säure werden in ein Gemisch von 166,7 g 2-Chlorethanphosphonsäuredichlorid, 33,3 g Vinylphosphonsäuredichlorid und 1 g Trimethylphosphinoxid bei 140 °C während 17 Stunden unter lebhaftem Rühren eingetropft, wobei in das Reaktionsgemisch Phosgen eingeleitet wird. Dann wird bei Raumtemperatur das im Reaktionsansatz vorhandene überschüssige Phosgen durch Stickstoff ausgeblasen und der Rückstand bei 0,5 Torr (0,67 mbar) destilliert. Man erhält 140 g Vinylphosphonsäuredichlorid, 314,5 g 2-Chlorethanphosphonsäuredichlorid und 25 g Rückstand. Bezogen auf die eingesetzte rohe Vinylphosphonsäure beträgt die Ausbeute an Vinylphosphonsäuredichlorid 41,5 % d. Th. und an 2-Chlorethanphosphonsäuredichlorid 50,5 % d. Th.

**Ansprüche**

1. Verfahren zur Herstellung von Vinylphosphonsäuredichlorid und 2-Chlorethanphosphonsäuredichlorid, dadurch gekennzeichnet, daß man 2-Acetoxyethanphosphonsäuredialkylester der allgemeinen Formel

$$CH_3COOCH_2CH\overset{\overset{O}{\|}}{P}(OR)_2$$

worin R Alkylgruppen mit 1 bis 4 Kohlenstoffatomen bedeutet, in Gegenwart saurer oder basischer Katalysatoren auf 150-270 °C erhitzt unter Abspaltung von Alkylacetat, das dabei entstehende Reaktionsgemisch mit Wasser bei Temperaturen zwischen 130-230 °C unter gleichzeitiger Abdestillation des gebildeten Alkohols umsetzt und die dabei gebildete rohe Vinylphosphonsäure in Gegenwart von Katalysatoren sowie in Gegenwart von Phosphonsäuredichloriden mit Phosgen umsetzt.

2. Verfahren nach Anspruch 1, dadurch gekennzeichnet, daß man die Abspaltung des Alkylacetats bei 170 bis 230 °C und die Hydrolyse des dabei entstehenden Reaktionsgemisches bei 140 bis 175 °C vornimmt.

3. Verfahren nach Anspruch 1, dadurch gekennzeichnet, daß man die Abspaltung des Alkylacetats und die Phosgenierung in Gegenwart von Vinylphosphonsäure durchführt.

**Claims**

1. A process for the preparation of vinylphosphonic acid dichloride and 2-chloroethanephosphonic acid dichloride, which is characterized by heating a 2-acetoxyethanephosphonic acid dialkyl ester of the general formula

$$CH_3COOCH_2CH\overset{\overset{O}{\|}}{P}(OR)_2$$

in which R denotes alkyl groups having 1 to 4 carbon atoms in the presence of acid or basic catalysts at 150-270 °C with elimination of an alkyl acetate, reacting the resulting reaction mixture

with water at temperatures between 130-230 °C while simultaneously distilling off the alcohol formed and reacting the crude vinylphosphonic acid thus formed with phosgene in the presence of catalysts and also in the presence of phosphonic acid dichlorides.

2. The process as claimed in claim 1, wherein the elimination of alkyl acetate is carried out at 170 to 230 °C and the hydrolysis of the resulting reaction mixture at 140 to 175 °C.

3. The process as claimed in claim 1, wherein the elimination of alkyl acetate and the phosgenation are carried out in the presence of vinylphosphonic acid.

**Revendications**

1. Procédé de préparation du dichlorure de l'acide vinylphosphonique et du dichlorure de l'acide chloro-2 éthane-phosphonique, procédé caractérisé en ce qu'on chauffe à une température de 150 à 270 °C un acétoxy-2 éthane-phosphonate de dialkyle répondant à la formule générale

$$CH_3COOCH_2CH\overset{\overset{O}{\|}}{P}(OR)_2$$

dans laquelle les R représentent chacun un radical alkyle contenant de 1 à 4 atomes de carbone, en présence de catalyseurs acides ou basiques, chauffage au cours duquel il se produit un enlèvement d'acétate d'alkyle, on fait réagir avec de l'eau le mélange réactionnel qui se forme alors, à des températures comprises entre 130 et 230 °C, tout en chassant par distillation l'alcool formé, et on fait réagir avec du phosgène l'acide vinylphosphonique brut alors formé, en présence de catalyseurs ainsi qu'en présence de dichlorures d'acides phosphoniques.

2. Procédé selon la revendication 1, caractérisé en ce qu'on effectue l'enlèvement d'acétate d'alkyle à une température comprise entre 170 et 230 °C, et l'hydrolyse du mélange réactionnel qui se forme alors à une température comprise entre 140 et 175 °C.

3. Procédé selon la revendication 1, caractérisé en ce qu'on effectue l'enlèvement de l'acétate d'alkyle et la phosgénation en présence d'acide vinylphosphonique.